# EUROPEAN PATENT SPECIFICATION

(11) **EP 1 636 694 B1**
(45) Date of publication and mention of the grant of the patent: **01.04.2020**
(21) Application number: 04754652.8
(22) Date of filing: 08.06.2004
(51) Int. Cl.: G06F 9/00, G06F 11/30, G06F 12/14, H04L 12/24

(54) **ACCESS CONTROL USING CONFIGURATION FILES**
ZUGANGSREGELUNG DURCH VERWENDUNG VON KONFIGURATIONSDATEIEN
CARACTÉRISTIQUE DE CONTRÔLE D'ACCÈS À DISTANCE SERVANT À LIMITER L'ACCÈS À DES ÉLÉMENTS DE FICHIER DE CONFIGURATION

(30) Priority: 24.06.2003 US 602754
(43) Date of publication of application: 22.03.2006
(73) Proprietor: InterDigital CE Patent Holdings, 75017 Paris (FR)
(72) Inventor: BROWN, Larry, Cecil, Westfield, IN 46074 (US); MAYERNICK, Mark, Ryan, Carmel, IN 46033 (US); LAVAUD, Simon, Andre, Fishers, IN 46038 (US); RYAN, David, Lee, Peachtree City, GA 30269 (US)
(74) Representative: Huchet, Anne
(86) International application number: PCT/US2004/018100
(87) International publication number: WO 2005/006182

(56) References cited:
- US-A- 5 771 354
- US-A1- 2001 011 304
- US-A1- 2002 144 274

## Description

### FIELD OF THE INVENTION

The present invention generally relates to network communications and, more particularly, to a method and system for customizing a broadband access device configuration file to provide security for a service provider and/or service features for the end user.

### BACKGROUND OF THE INVENTION

On many Broadband Access Products such as a Data Over Cable Service Interface Specification (DOCSIS) Cable Modem, valuable troubleshooting diagnostic information elements are made available to the end user by means of an HTTP server built into the device. This built-in server enables the end user to view, using a personal computer, web pages containing this diagnostic information. However, Service Providers who purchase and/or deploy these products vary greatly in their policies as to exactly what information elements they feel can be revealed to end users without compromising their companies' internal service security standards.

US 2002/0144274 discloses a system in which the service provider may modify the subscription information in an access device such as to enable or disable skipping functionalities of advertisements during recording and playback.

Therefore, a need exists for a feature, which enables the Service Provider to, from their location, remotely configure an in-home device to reveal information elements needed to provide a service or protect the service provider's system, but still limit access to additional information.

### SUMMARY OF THE INVENTION

The invention is defined by the appended security system claim 1 and corresponding method claim 6. Further details are defined in the dependent claims.

### BRIEF DESCRIPTION OF THE DRAWINGS

The advantages, nature, and various additional features of the invention will appear more fully upon consideration of the illustrative embodiments now to be described in detail in connection with accompanying drawings wherein:
FIG. 1 is an exemplary block/system diagram showing network access devices connected to a network via service provider having a control mechanism for limiting access to the network access devices by an end user in accordance with the present invention;
FIG. 2 is a block/system diagram showing information categories for the network access devices in accordance with one embodiment of the present invention; and
FIG. 3 is a block/flow diagram showing an illustrative method for maintaining system security for a network service provider in accordance with the present invention.

It should be understood that the drawings are for purposes of illustrating the concepts of the invention and are not necessarily the only possible configuration for illustrating the invention.

### DETAILED DESCRIPTION OF THE INVENTION

The present invention provides a method and system for remotely configuring a broadband access device to provide or maintain the service provider's system security. The present invention may also provide configurable diagnostic tools or other services, which are provided and configured remotely by the service provider.

In one embodiment, a distributed software control mechanism is provided by which a Broadband Access Service Provider (e.g., cable operator) can specify exactly which, if any, elemental diagnostic information will be available to the end user of the access device. This may be performed by including elements in a Broadband Access Device configuration file, which is preferably downloaded during the device startup. The needed software may be distributed between the configuration file (configuration instructions) and the access device (firmware).

It is to be understood that the present invention is described in terms of a cable access system; however, the present invention is much broader and may include any distributed system, which is maintained and serviced by a service provider. In addition, the present invention is applicable to any system including telephone networks, set top box access systems, computer networks, satellite networks, Internet systems, etc. The present invention is described in terms of a cable network; however, the concepts of the present invention may be extended to DSL, wireless or other network types using other technologies.

It should also be understood that the elements shown in the FIGS. may be implemented in various forms of hardware, software or combinations thereof. Preferably, these elements are implemented in a combination of hardware and software on one or more appropriately programmed general-purpose devices, which may include a processor, memory and input/output interfaces.

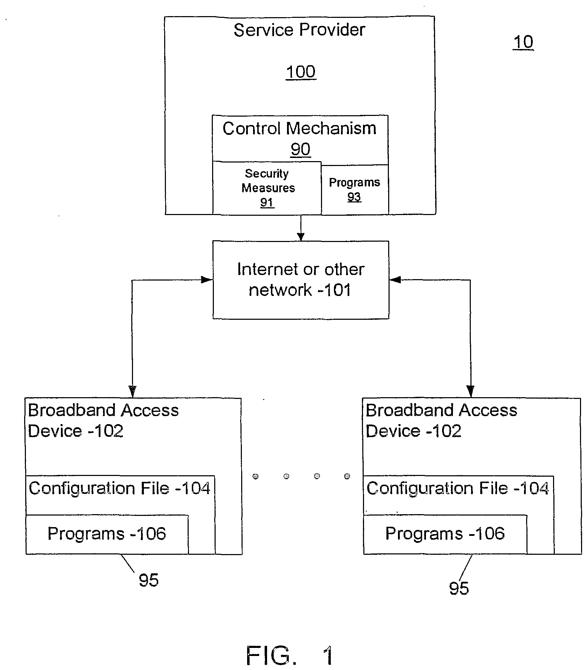

Referring now in specific detail to the drawings in which like reference numerals identify similar or identical elements throughout the several views, and initially to FIG. 1, a system architecture 10 for distributing voice, data and/or video information is shown. System architecture 10 is presented in an exemplary cable or Internet environment for employing the inventive method and system. However, the system may be employed in a plurality of other applications including wireless or satellite networks, local area networks, etc. Details of the individual block components making up the system architecture which are known to skilled artisans will only be described in details sufficient for an understanding of the present invention. The system block diagram 10 is composed of several functional blocks.

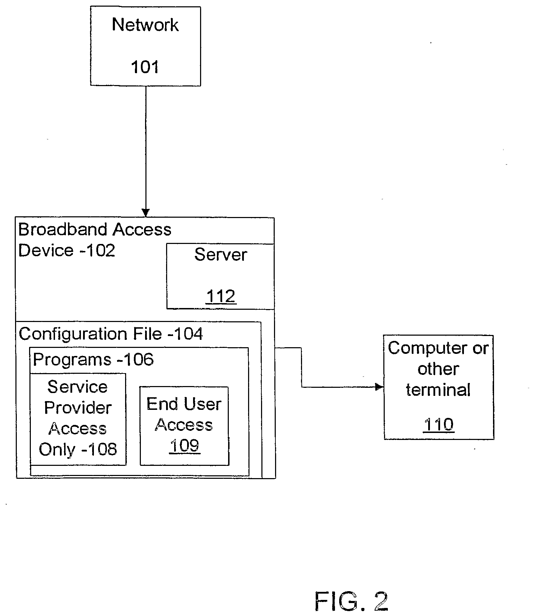

A service provider 100 provides services to end users 95 with access devices 102. Access devices 102 are employed as an interface between a network 101 (such as the Internet, cable network, etc.) and end user's equipment that may include a personal computer 110 (FIG. 2) or other device or system. When access device 102 is initially set up, information is downloaded from service provider 100, which is used to configure access device 102. This enables access device 102 to establish communication through the service provider 100 to network 101.

Each access device 102 preferably includes a configuration file 104 which stores web addresses and other configuration information that permits access device 102 to connect with network 101 through service provider 100. In accordance with the present invention, service provider 100 includes a control mechanism 90, which permits the service provider to select what information elements stored in access device 102, including that derived from the configuration file104, can be accessed by the user. In this way, the user is excluded from accessing information elements, which may be used to compromise the system security of the service provider.

Control mechanism 90 is preferably implemented in software, and may include one or more programs 93 for implementing functions in accordance with the present invention. Control mechanism 90 may be employed manually or automatically to flag certain information, such as designated web pages, to prevent user access. In manual mode, a person or persons at the service provider's location can designate files, web pages or other information that each end user either individually or as a group of end users will be denied access to from within the configuration file 104 of each user. In automatic mode, control mechanism 90 may scan for predesignated files, web pages, etc. which end users should not be able to access within their configuration file 104.

Control mechanism 90 may includes security measures 91 and designate a security code, level or index to sensitive information during a download sequence and may from time to time access the configuration files of end users to determine that these files were not illegally accessed. In one embodiment, portions 106 of configuration files may be designated in accordance with security risk, such that, access to certain designations of files is prohibited by the end user. These designations may be set manually or automatically, by the service provider. Advantageously, these settings may be remotely set or changed by the service provider from the service provider's location using a network management protocol such as, for example, a Simple Network Management Protocol (SNMP).

Service provider 100 may maintain a secured system, that is, access to service provider 100 is limited. In addition, information stored on service provider's systems may include information of a sensitive nature, which even end users need to be prevented from accessing.

Referring to FIG. 2 with continued reference to FIG. 1, service provider 100 (FIG. 1) retains control of which information elements can be revealed to an end user or subscriber; thereby enabling the service provider to maintain security over the information elements which may enable the end user to compromise the service provider system's integrity if revealed to end users. Broadband access device 102 is programmed by service provider 100. Programs 106 in the configuration file 104 of device 102 may be designated at the time of download from the service provider or later designated/changed by the service provider by employing control mechanism 90. This feature of the present invention separates the files or components thereof into two groups, namely, service provider access only files 108 and end user access files 109. Device 102 may include a server 112, such as an HTML server, which is capable of displaying information included in files 109 to the end user. However, no access is provided to files 108, which have been designated by the service provider 100 to prevent access from the end user.

For example, an end user wishes to access the Internet through access device 102. The end user boots up a computer or other terminal device 110 but is unable to log onto his/her account maintained with service provider 100. The end user decides to run a diagnostic check of configuration file 104. The diagnostic feature is run form programs 106, but access to the output of the diagnostic tool is limited to only the information not designated for service provider access only 108. In this way, the system of service provider is securely maintained while the end user is still capable of performing needed tests and/or functions with device 102.

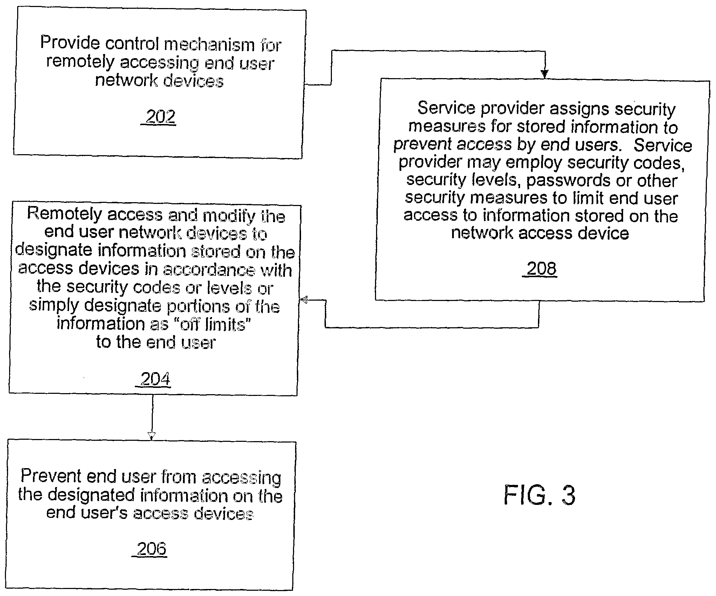

Referring to FIG. 3, a block/flow diagram is shown for a method for maintaining system security for a network service provider in accordance with one embodiment of the present invention. In block 202, a control mechanism is provided, preferably at the service provider's location, for remotely accessing end user network access devices. The control mechanism is preferably implemented as a software program for accessing and modifying the information of the access devices and designating portions thereof to prevent access by the end users. The control mechanism downloads information to an access device, initially (for example at the initial device configuration), and may provide levels of security or a security code for each component to limit access to the information depending on the security clearance that an end user may possess. The information stored is preferably a configuration file.

In block 204, the control mechanism or other means of the service provider can remotely access and modify the end user network devices to designate information stored on the access devices in accordance with the security codes or levels or simply designate portions of the information as "off limits" to the end user. Remotely accessing the end user devices is preferably performed from a service provider's location. Advantageously, the information in an end user's configuration file may be accessed even after the information is downloaded. This permits the service provider the capability of accessing the configuration files to redesignate previously undesignated or designated information stored therein.

Different end users may have different levels of access depending on usage or clearance levels. Once designated, the end user is prevented from accessing the designated information on the end user's access device, in block 206.

In block 208, the service provider assigns security measures for the stored information to prevent access thereof by the end users. The service provider may employ security codes, security levels, passwords or other security measures to limit end user access to information stored on the network access device. The security codes or levels may be associated with the designated portions at or before initializing the access devices or after initializing the access devices.

Having described preferred embodiments for remote access control feature for limiting access to configuration file components (which are intended to be illustrative and not limiting), it is noted that modifications and variations can be made by persons skilled in the art in light of the above teachings.

## Claims

1. A security system for use in a distributed network, comprising:
a service provider (100) selectively accessible via a network (101) by a plurality of end users (95) each having an access device (102) for accessing the network, said access device having a configuration file downloaded during startup of the access device; and
a control mechanism (90) disposed at a location of the service provider configured to access and modify stored information (104) of the configuration file on each access device of the end users to designate portions of the information to prevent access thereof by the end users.

2. The system as recited in claim 1, wherein the stored information includes a configuration file (104) for the access device.

3. The system as recited in claim 1, wherein service provider includes security levels (91) for the information to prevent access thereof by the end users.

4. The system as recited in claim 1, wherein the information includes diagnostic information.

5. The system as recited in claim 3, wherein the security levels (91) are associated with the designated portions after initializing the access devices.

6. A method for maintaining system security for a network service provider, comprising:
providing (202) a control mechanism for remotely accessing and modifying end user network access devices, said end user network access devices having a configuration file downloaded during startup;
remotely accessing and modifying (204) the end user network devices to designate information of the configuration file stored on the access devices; and
preventing (206) the end user from accessing the designated information on the end user's access device.

7. The method as recited in claim 6, wherein providing the control mechanism (202) includes providing a software program (93) for accessing and modifying the information of the access devices and designating portions thereof to prevent access by the end users.

8. The method as recited in any of claims 6 or 7, wherein remotely accessing and modifying (204) the end user network devices includes remotely accessing the end user devices from a service provider's location.

9. The method as recited in any of claims 6 to 8, wherein the information stored on the network access devices includes a configuration file (104) for the access device.

10. The method as recited in any of claims 6 to 9, wherein preventing (206) the end user from accessing the designated information includes employing a security code (91) for the designated portions to prevent access thereof by the end users.

11. The method as recited in claim 6, wherein the information includes diagnostic information.

12. The method as recited in claim 10, wherein the security code (91) is associated with the designated portions after initializing the access devices.

13. The method as recited in any of claims 6 to 12, further comprising assigning security levels (208) for the stored information to prevent access thereof by the end users.

14. The method as recited in claim 13, wherein the security levels (91) are associated with the designated portions at or before initializing the access devices.

15. The method as recited in claim 13, wherein the security levels (91) are associated with the designated portions after initializing the access devices.

## Patentansprüche

1. Sicherheitssystem zur Verwendung in einem dezentralen Netzwerk, umfassend: einen Dienstanbieter (100), auf den über ein Netzwerk (101) selektiv durch mehrere Endbenutzer (95) zugegriffen werden kann, von denen jeder eine Zugriffsvorrichtung (102) für den Zugriff auf das Netzwerk aufweist, wobei die Zugriffsvorrichtung eine Konfigurationsdatei aufweist, die während des Starts der Zugriffsvorrichtung heruntergeladen wird; und einen Steuermechanismus (90), der an einem Ort des Dienstanbieters angeordnet ist, der so konfiguriert ist, dass er auf gespeicherte Informationen (104) der Konfigurationsdatei auf jeder Zugriffsvorrichtung der Endbenutzer zugreift und diese modifiziert, um Teile der Informationen zu bestimmen, um den Zugriff darauf durch die Endbenutzer zu verhindern.

2. System nach Anspruch 1, wobei die gespeicherten Informationen eine Konfigurationsdatei (104) für das Zugriffsgerät enthalten.

3. System nach Anspruch 1, wobei der Dienstanbieter Sicherheitsstufen (91) für die Informationen einschließt, um den Zugang der Endbenutzer zu verhindern.

4. System nach Anspruch 1, wobei die Informationen diagnostische Informationen enthalten.

5. System nach Anspruch 3, wobei die Sicherheitsstufen (91) nach der Initialisierung der Zugriffsgeräte den bezeichneten Teilen zugeordnet werden.

6. Verfahren zur Aufrechterhaltung der Systemsicherheit für einen Netzwerkdienstanbieter, umfassend: Bereitstellen (202) eines Steuermechanismus zum Fernzugriff auf und Modifizieren von Endbenutzer-Netzwerkzugriffsvorrichtungen, wobei die Endbenutzer-Netzwerkzugriffsvorrichtungen eine Konfigurationsdatei aufweisen, die während des Starts heruntergeladen wird; Fernzugriff auf und Modifizieren (204) der Endbenutzer-Netzvorrichtungen, um Informationen der auf den Zugriffsvorrichtungen gespeicherten Konfigurationsdatei zu bezeichnen; und Verhindern (206), dass der Endbenutzer auf die bezeichneten Informationen auf der Zugriffsvorrichtung des Endbenutzers zugreift.

7. Verfahren nach Anspruch 6, wobei das Bereitstellen des Steuermechanismus (202) das Bereitstellen eines Softwareprogramms (93) für den Zugriff auf und das Modifizieren der Informationen der Zugriffsvorrichtungen und das Bezeichnen von Teilen davon umfasst, um den Zugriff durch die Endbenutzer zu verhindern.

8. Verfahren nach einem der Ansprüche 6 oder 7, wobei der Fernzugriff auf und das Modifizieren (204) der Endbenutzer-Netzwerkvorrichtungen den Fernzugriff auf die Endbenutzer-Vorrichtungen vom Standort eines Dienstanbieters aus einschließt.

9. Verfahren nach einem der Ansprüche 6 bis 8, wobei die auf den Netzwerkzugangsvorrichtungen gespeicherten Informationen eine Konfigurationsdatei (104) für die Zugriffsvorrichtung enthalten.

10. Verfahren nach einem der Ansprüche 6 bis 9, wobei das Verhindern (206) des Zugriffs des Endbenutzers auf die bezeichneten Informationen das Verwenden eines Sicherheitscodes (91) für die bezeichneten Teile einschließt, um den Zugriff durch die Endbenutzer zu verhindern.

11. Verfahren nach Anspruch 6, wobei die Informationen diagnostische Informationen enthalten.

12. Verfahren nach Anspruch 10, wobei der Sicherheitscode (91) nach der Initialisierung der Zugriffsvorrichtungen den bezeichneten Teilen zugeordnet wird.

13. Verfahren nach einem der Ansprüche 6 bis 12, das ferner die Zuweisung von Sicherheitsstufen (208) für die gespeicherten Informationen umfasst, um den Zugriff der Endbenutzer auf diese Informationen zu verhindern.

14. Verfahren nach Anspruch 13, wobei die Sicherheitsstufen (91) den bezeichneten Teilen bei oder vor der Initialisierung der Zugriffsvorrichtungen zugewiesen werden.

15. Verfahren nach Anspruch 13, wobei die Sicherheitsstufen (91) den bezeichneten Teilen nach der Initialisierung der Zugriffsvorrichtungen zugewiesen werden.

## Revendications

1. Système de sécurité à utiliser dans un réseau distribué, comprenant :
un fournisseur de services (100) accessible de façon sélective via un réseau (101) à une pluralité d'utilisateurs finaux (95) possédant chacun un dispositif d'accès (102) pour accéder au réseau, ledit dispositif d'accès disposant d'un fichier de configuration téléchargé au démarrage du dispositif d'accès ; et
un mécanisme de contrôle (90) disposé à un emplacement du fournisseur de services configuré pour accéder aux informations stockées (104) du fichier de configuration sur chaque dispositif d'accès des utilisateurs finaux et les modifier pour désigner des parties des informations afin d'en interdire l'accès aux utilisateurs finaux.

2. Système selon la revendication 1, dans lequel les informations stockées incluent un fichier de configuration (104) pour le dispositif d'accès.

3. Système selon la revendication 1, dans lequel le fournisseur de services inclut des niveaux de sécurité (91) pour les informations afin d'en interdire l'accès aux utilisateurs finaux.

4. Système selon la revendication 1, dans lequel les informations incluent des informations de diagnostic.

5. Système selon la revendication 3, dans lequel les niveaux de sécurité (91) sont associés aux parties désignées après l'initialisation des dispositifs d'accès.

6. Procédé de gestion de la sécurité du système pour un fournisseur de services réseau, comprenant :
la fourniture (202) d'un mécanisme de contrôle pour l'accès et la modification à distance des dispositifs d'accès au réseau des utilisateurs finaux, lesdits dispositifs d'accès au réseau des utilisateurs finaux disposant d'un fichier de configuration téléchargé au démarrage ;
l'accès et la modification à distance (204) des dispositifs réseau des utilisateurs finaux afin de désigner des informations du fichier de configuration stocké sur les dispositifs d'accès ; et
l'interdiction (206) pour l'utilisateur final d'accéder aux informations désignées sur le dispositif d'accès de l'utilisateur final.

7. Procédé selon la revendication 6, dans lequel la fourniture du mécanisme de contrôle (202) inclut la fourniture d'un programme logiciel (93) pour accéder aux informations des dispositifs d'accès et les modifier et désigner des parties afin d'en interdire l'accès aux utilisateurs finaux.

8. Procédé selon l'une quelconque des revendications 6 ou 7, dans lequel l'accès et la modification (204) à distance des dispositifs réseau des utilisateurs finaux et leur modification incluent l'accès à distance aux dispositifs des utilisateurs finaux à partir de l'emplacement d'un fournisseur de services.

9. Procédé selon l'une quelconque des revendications 6 à 8, dans lequel les informations stockées sur les dispositifs d'accès au réseau incluent un fichier de configuration (104) pour le dispositif d'accès.

10. Procédé selon l'une quelconque des revendications 6 à 9, dans lequel l'interdiction (206) pour l'utilisateur final d'accéder aux informations désignées inclut l'utilisation d'un code de sécurité (91) pour les parties désignées afin d'en interdire l'accès aux utilisateurs finaux.

11. Procédé selon la revendication 6, dans lequel les informations incluent des informations de diagnostic.

12. Procédé selon la revendication 10, dans lequel les code de sécurité (91) est associé aux parties désignées après l'initialisation des dispositifs d'accès.

13. Procédé selon l'une quelconque des revendications 6 à 12, comprenant en outre l'affectation de niveaux de sécurité (208) pour les informations stockées afin d'en interdire l'accès aux utilisateurs finaux.

14. Procédé selon la revendication 13, dans lequel les niveaux de sécurité (91) sont associés aux parties désignées pendant ou avant l'initialisation des dispositifs d'accès.

15. Procédé selon la revendication 13, dans lequel les niveaux de sécurité (91) sont associés aux parties désignées après l'initialisation des dispositifs d'accès.
